# EUROPEAN PATENT APPLICATION

(11) **EP 4 707 018 A1**
(43) Date of publication of application: **11.03.2026**
(21) Application number: 25198578.4
(22) Date of filing: 28.08.2025
(51) Int. Cl.: B60K 15/03, B60K 15/07

(54) **TRUCK COMPRISING A SIDE VESSEL MOUNT STRUCTURE WITH A BREAKABLE ELEMENT**

(30) Priority: 30.08.2024 NL 2038544
(71) Applicant: DAF Trucks N.V., 5643 TW Eindhoven (NL)
(72) Inventor: VAN DER KNAAP, Albertus Clemens Maria, 5643 TW Eindhoven (NL); SCHELLEKENS, Josephus Cornelis Maria, 5643 TW Eindhoven (NL); WEIJENBORG, Bernardus Johannes Maria, 5643 TW Eindhoven (NL); PIROS, Zoltán, 5643 TW Eindhoven (NL)
(74) Representative: V.O.

(57) **Abstract**

A truck, comprising a chassis and a side vessel mount structure providing at least one neck mount that suspends a side-mounted pressure vessel to the chassis in a substantially level orientation between a front axle and a rear axle of the truck. The or each neck mount is coupled to a support arm by coupling arrangement, that comprises a first and second leg that extend downward from the support arm and connect to opposing sides of the neck mount. A reinforced connection is provided between the first leg and the neck mount, and a weakened connection is provided by a breakable element between the second leg and the neck mount. The breakable element is arranged for breaking in case of a substantially upward impact while the reinforced connection remains intact, to cause an upward rotation of the neck mount.

## Description

The invention relates to a truck comprising a chassis and a side vessel mount structure providing one or more neck mounts that suspend a chassis side vessel in a substantially level orientation to the chassis between a front axle and a rear axle of the truck.

In Fuel Cell Electric Vehicles (FCEV), the fuel cell unit that generates electric power which is fed to an electro-mechanic motor that drives the wheels may be supplied with a fuel, such as hydrogen, which is stored in pressurized fuel tanks mounted on board of the vehicle. Alternatively, in Hydrogen Internal Combustion Engine vehicles (H2-ICE) the hydrogen fuel is burnt in the combustion chambers with pistons that move up and down, directly driving the wheels via the engine's central output shaft. The same Hydrogen Storage System (HSS) comprising pressurized fuel tanks mounted on board of the vehicle may be needed in these H2-ICE applications. Such pressurized fuel tanks may for example be mounted on a lateral side of the chassis, and/or behind the cabin, either for application in tractor semi-trailer combinations or box trucks.

To allow axial and radial expansion of the tanks without inducing internal stresses, it is known to suspend the tanks using a "neck mounting" arrangement in which the pressure vessel is mounted only at its axial ends, thus without using any further mounting elements on the cylindrical body of the tank.

However, while the pressurized fuel tank is most vulnerable at its axial ends, specifically consisting of aluminum boss end inserts that are encapsulated into the spherical dome ends of the carbon fiber body of the cylindrical pressurized fuel tanks, the suspension arrangement needs to reach a high level of crash impact safety to avoid hazardous situations in case of a collision of the truck. For example, the suspended fuel tank may be subjected to an impact with a force component in the vertical upward direction, e.g. caused by a passenger car that collides into the side of the truck and is wedged underneath the pressurized fuel tank, or because the truck is driven over a high curb or speed bump. In such cases, it desired that the fuel tanks stay attached to the vehicle structure and no substantial leakage of hydrogen is present after such a crash impact misuse event.

### SUMMARY

It is therefore an object of the present invention to further improve the crash safety of a truck storing pressurized fuel tanks onboard, in particular in case of an upward directed impact on the fuel tank. Aspects of the invention thus relate to a truck as defined in the appended claims.

The truck comprises a chassis and a side vessel mount structure providing one or more neck mounts that suspend a side-mounted pressure vessel to the chassis, preferably at one or both axial ends, in a substantially level orientation between a front axle and a rear axle of the truck. A support arm laterally extends from the or each neck mount towards the chassis. The or each support arm is coupled to the respective neck mount by a coupling arrangement.

The coupling arrangement comprises a first and second leg that extend downward from the support arm and connect to opposing sides of the neck mount. A reinforced connection is provided between the first leg and the neck mount, and a weakened connection is provided by a breakable element between the second leg and the neck mount.

The breakable element is arranged for breaking in case of an upward impact on the side-mounted pressure vessel while the reinforced connection between the neck mount and the first leg remains intact, thereby causing an upward rotation of the neck mount about the reinforced connection to protect the neck mount against an overload.

The coupling arrangement is relatively stiff in the vertical, downward direction along which the first and second leg extend between the support arm and the neck mount. Hence, in case of an upward impact on the side-mounted pressure vessel, large forces may act on the neck mount, which may damage or rupture the fragile axial ends of the vessel. To solve this, the invention provides for an upward impact mitigating coupling arrangement with a combination of a reinforced connection between the neck mount and the first leg, and a weakened connection between the neck mount and the second leg, i.e. by controlled breakage of the breakable element, to limit the impact force acting on the neck mount in the stiff vertical direction of the first and second leg.

The weakened connection formed by the breakable element is weak enough to break under impact, but strong enough to stay intact during normal operation of the truck. Conversely, the reinforced connection remains intact under impact as well as during normal operation. Accordingly, once the breakable element is broken due to an impact, the neck mount is only connected to the first leg. As a result, the upward force on the neck mount causes the neck mount to rotate upward about the reinforced connection. Said rotation absorbs a portion of the impact energy and reduces the peak load on the neck mount via bending deformation of the first leg, effectively providing a crash crumbling stroke in vertical direction for the neck mount that is laterally positioned with an offset distance relative and perpendicular to the first leg.

In preferred embodiments, the first and second leg each have a U-shaped profile, comprising a base that extends between the neck mount and the support arm in the upward direction and a pair of upstanding walls that extend laterally from the base, thereby defining a vertical slot. The vertical slots of the respective U-shaped first and second leg face each other. The neck mount extends into the opposing vertical slots, and the vertical slots form a guide for guiding the upward rotation of the neck mount about the reinforced connection, effectively preventing or resisting to a longitudinal displacement in axial direction of the tank of the neck mount once the weakened connection to the second leg is broken. Such a preferred design improves the robustness and crash performance of the side vessel mount system in case the upward vertical impact is accompanied with a longitudinal force component acting on the neck mount, e.g. in axial direction of the tank, which typically is the case at an angled side impact from a passenger car with a low height wedge shaped nose or whilst driving at low speed over a high curb or speed hump that exceeds the road clearance of the chassis sided tank. Hence, the guide formed by the opposing vertical slots prevents that the neck mount moves in directions other than the upward rotation, e.g. by constraining an out-of-plane rotation of the neck mount to prevent warping or torsion of the first leg about its vertical axis. In other words, the slots define a guided path, or channel, that guides the upward rotation of the neck mount.

As defined in the claims, at least one axial end of the elongate pressure vessel is suspended by a neck mount that, via the coupling arrangement, is coupled to a support arm that extends from the chassis. The other end of the pressure vessel may be suspended by a further neck mount, in which case the further neck mount is preferably coupled to a further support arm via a further coupling arrangement, e.g. similar to the coupling arrangement described herein. E.g. at least one, or both of the neck mounts may comprise a deformable coupling arrangement comprising an assembly with two leg members that extend downward from the support arm and are spaced apart in lateral direction and that interconnect the neck mount to the support arm via a so-called "four bar mechanism" or "parallelogram construction" to guide the neck mount to the chassis via a predetermined path, or guided path, once the coupling arrangement deforms under side impact from a vehicle or object into the chassis sided tank. Alternatively, the one or more coupling arrangements may be based on a flex plate assembly, e.g. comprising one or more flex plates, that are flexible in out-of-plane directions and rigid in at least two in-plane directions, and that hold the pressure vessel in position while allowing axial and radial expansion of the vessel due to internal pressure variations. The flex plate assembly e.g. comprises a stack of multiple flex plates. A neck mount that comprises a flex plate assembly at one axial end of the pressure vessel can e.g. be favourably combined with a ball joint or cardanic coupling at the other axial end via a coupling arrangement according to aforementioned "parallelogram construction", to form a non-overconstrained suspension. The parallelogram construction is preferably construed such that it has a high bending stiffness in out-of-plane bending direction with the objective to tightly fixate the chassis sided tank in longitudinal direction of the truck whilst the flex plate assembly at the other end absorbs pressure dependent tank expansions and misalignment of the tank relative to the truck chassis. Alternatively, the pressure vessel may be suspended by a neck mount at one axial end, combined with any other type of further suspension arrangement to suspend the remaining part of the pressure vessel, such as a strap mount around the cylindrical body of the vessel, or a clamping arrangement that may be slidable in longitudinal direction of the tank.

Preferably, the breakable element is constructed to break when an upward force on the neck mount exceeds a boss end protection force threshold, and the reinforced connection is constructed to remain intact during the whole bending deformation stroke and corresponding resistance force of the first leg once the connection to the second leg is broken. The breaking force threshold can e.g. correspond to a range between 30-100 kN acting on the neck mount in order to provide an effective and robust crash protection means. In this way, it can be ensured that the weakened connection remains intact during normal operation of the truck and only breaks in case of an impact, and that the neck mount stays connected to the first leg during the impact. Preferably, the first leg is configured to bend inwards towards the second leg in response to the substantially upward impact force when the breakable element is broken to cause the upward rotation of the neck mount about the reinforced connection, thereby absorbing a portion of the impact energy and limiting a resulting force on the neck mount. Hence, by adapting the breaking force threshold as well as the bending stiffness of the first leg, the coupling arrangement may be configured to limit the resulting force on the neck mount, e.g. such that the peak force on the neck mount is in a range between 30-100 kN.

For example, in some embodiments the neck mount is connected to the first leg by a first bolt connection, and the neck mount is connected to the second leg by a second bolt connection, wherein the first bolt connection is reinforced with respect to the second bolt connection. In other words, the second bolt connection is weaker than the first bolt connection and will break first in case of an upward impact on the neck mount. Hence, the second bolt connection forms the breakable element. The first and second bolt connections may both comprise one or more bolts that extend laterally between the neck mount and the first and second leg, respectively. To provide the reinforcement, the first bolt connection may comprise more bolts than the second bolt connection. Alternatively, the same number of bolts may be used at the first and second bolt connections, but the bolt(s) at the first bolt connection have a larger diameter, or are made of a stronger material, than the bolt(s) at the second bolt connection. Alternatively, or additionally, a portion of the second leg may locally weakened near the connection with the neck mount, e.g. by means of cutouts or a reduced wall thickness, such that in case of an upward impact on the neck mount the second leg locally tears or ruptures. Alternatively, or additionally, a portion of the first leg may be locally reinforced near the connection with the neck mount, e.g. by means of an increased wall thickness or additional fastening means between the first leg and the neck mount, such as an adhesive, a weld, a spline, or a key and slot.

The reinforced connection between the neck mount and the first leg may comprise a form-lock, e.g. in addition to a bolt connection. Such a form-lock, arranged for constraining an upward movement of the neck mount relative to the first leg, can be provided in various ways.

The form-lock may for example comprise an indent that protrudes laterally out from the first leg above the neck mount. A lower edge of the indent may thus engage a contact surface of the neck mount. Such an indent, or abutment, can be integrally formed in the first leg. Alternatively, an abutment can be formed by a portion of the first leg that is incised such that a cantilevered tab is formed that extends in the vertical, downward direction. An upper part of the cantilevered tab may be connected to the first leg, while a lower part is slightly bent laterally out from the first leg such that a lower edge of the cantilevered tab abuts the contact surface of the neck mount. The tab preferably remains substantially vertical, about parallel to the first leg. In this way, in case of an upward impact on the neck mount the tab is loaded in the relatively stiff vertical plane. Alternatively, the abutment may be formed by a separate part that is fixated to the first leg and extends substantially vertically. The abutment can e.g. comprise a hook, strut or ratchet, or any other means for preventing upward migration of the neck mount with respect to the first leg.

In some variants, the form-lock comprises a locking pin, key, or dowel pin, that extends laterally between the first leg and the neck mount. The shear strength of the locking pin prevents upward migration of the neck mount in case of an upward impact. Hence, by adapting the pin diameter, material and/or the number of locking pins, the level of reinforcement can be controlled. Alternatively, or additionally, the form-lock comprises a horizontal overlap, i.e. an overlap in a horizontal plane perpendicular to the vertical direction, between a contact surface of the neck mount and a contact surface of the first leg. For example, a lower end face of the first leg may abut the neck mount contact surface. The neck mount may be provided with a protrusion, or step, that extends laterally towards the first leg, to provide the contact surface. The first leg may be provided with a cutout or edge that forms a contact surface arranged for abutting the protrusion. Hence, in case of an upward impact on the neck mount the first leg is loaded in the stiff vertical direction.

In yet other or further variants of the form-lock, the form-lock comprises a plate that is mounted above the neck mount to a side of the first leg that faces the neck mount, wherein a lower edge of the plate abuts a contact surface of the neck mount. In other words, the plate is mounted flat against the first leg, such that a thickness of the plate defines a horizontal overlap with the contact surface of the neck mount. The plate can e.g. be mounted to the first leg by means of a bolt connection, a welded connection, or an adhesive. In case of an upward impact the plate is loaded in its plane, and the force is transferred to the first leg in the stiff vertical direction via the connection between the plate and the first leg. Instead of a separate plate, the first leg may be provided with an integrally formed step or protrusion above the neck mount that extends laterally inward and overlaps with the contact surface of the neck mount.

Besides protecting the neck mount against an overload in the upward direction, the coupling arrangement may additionally be arranged for protecting the neck mount against overloads in other directions. For example, a side impact on the side-mounted pressure vessel may cause a force on the neck mount in the lateral direction towards the chassis. To additionally cope with such side impacts, the first and second leg preferably together form a four bar mechanism between the support arm and the neck mount, e.g. a parallelogram mechanism. Such a four bar mechanism can be arranged for collapsing in the lateral direction when a lateral force on the neck mount exceeds a threshold force, e.g. by lateral bending or buckling of the first and second leg, wherein by collapsing the four bar mechanism guides the neck mount towards the chassis over a guided path while maintaining the mechanical connection between the support arm and the neck mount. In this particular case of a side impact from passenger car with a low height wedge shaped nose, the favorable protection aspects of both collapsing parallelogram construction and breaking of the weakened connection of the second leg support or amplify each other with the objective to limit the torque acting on the vulnerable boss end once the tank is being impacted at low level contact point just above the road and acting primarily in lateral direction. The collapsing of the four bar mechanism provides a first protection measure and the breaking of the weakened bolt connection provides a second protection measure, effectively letting the cylindrical tank body rotate without adding any further resistance in upward direction and move away from the side impact direction, particularly when the weakened connection of the second leg is located inwards, closest to the opposing chassis side.

In some embodiments, the neck mount comprises a ball bearing and a housing, wherein the ball bearing has an inner ring mounted to an axial end of the side-mounted pressure vessel and an outer ring fitted in a seat of the housing, and wherein the housing is connected to the first and second leg. The housing may provide a rigid link between the ball joint and at least the first leg, and is preferably constructed such that the connection between the ball joint and the first leg stays intact during an impact, to keep the axial end of the pressure vessel suspended to the chassis.

During both normal operation and crash events, the ball bearing constrains translations in all directions of the axial end with respect to the coupling arrangement, while allowing rotations of the axial end about any axis. As a result, when the breakable element is broken and the neck mount rotates upward during a substantially upward impact on the neck mount, the ball joint allows the axial end to freely follow the movement of the neck mount without inducing internal stresses in the axial end or the coupling arrangement.

Preferably, the housing comprises a bottom part that defines a bottom segment of the seat, and a top part that is mounted to the bottom part and defines a top segment of the seat, wherein only the bottom part is connected to the first and second leg. Thus, the bottom part interconnects the first and second leg, and both the weakened connection with the second leg as well as the reinforced connection with the first leg are with the bottom part of the housing only. This solution may provide for certain assembly advantages as more flexibility in the mounting order and the way the ball joint bearing can be axially fixated to the housing is present.

In some embodiments, the truck further comprises an auxiliary frame that is mounted to the chassis behind a cabin the truck, e.g. directly behind the cabin or between the cabin and a trailer or cargo box of the truck, wherein the auxiliary frame provides a lower neck mount that suspends an auxiliary pressure vessel in a substantially upright orientation. The lower neck mount may be arranged above the side-mounted pressure vessel, and at least one bottom frame member of the auxiliary frame preferably extends between the lower neck mount and the side-mounted pressure vessel, e.g. for the purpose of carrying a side fender construction at the outside edges of the vehicle, behind which the upstanding elongated pressure vessel is hidden (aerodynamics, stone impact protection and styling). Said at least one bottom frame member provides an end stop that is arranged for abutting a cylindrical body of the side-mounted pressure vessel in case of an upward impact, for bounding the upward rotation of the neck mount. Hence, by eliminating the need for a separate end stop, a compact solution is provided for absorbing the impact energy without overloading the neck mount. Since the at least one bottom frame member is arranged for abutting the cylindrical body only, the peak load on the relatively fragile axial ends of the vessel can be minimal. Preferably, the end stop that is formed by the at least one bottom frame member is arranged for contacting the cylindrical body of the vessel before the neck mount is at the end of its stroke of rotation about the reinforced connection. The at least one bottom frame member can for instance comprise a beam with an omega profile, comprising a central horizontal web with two vertical legs extending downward from the ends of the web, and an outward flange or lip at the bottom of each vertical leg, thereby forming an omega shaped cross section. This provides excellent load-bearing characteristics, e.g. for supporting the side fender system on a lateral side of the truck adjacent the upright suspended pressure vessel. The central web and vertical legs distribute loads efficiently, allowing the profile to support substantial weights without excessive deformation. The flanges or lips help to resist torsion and provide lateral stability, making the profile suitable for applications where both bending and twisting forces are present. Applying such an omega profile as carrier for side fender construction whilst being an integrated vertical end for a chassis side pressure vessel offers advantages in terms of high bending resistance to carry vertical load of the side fender unit and to provide sufficient deformation resistance to a vertically impacting chassis tank. Moreover, the lower lips of the omega profile provide for good distribution of the contact pressure over a relatively wide circumferential surface of the cylindrical body of the carbon fiber pressure vessel once it protrudes into the deforming omega profile.

Preferably, a vertical distance between the lower neck mount and the bottom frame member is at least 25 millimeter, more preferably at least 35 millimeters, to allow an upward deformation of the bottom frame member for absorbing a portion of the impact energy before the chassis sided tank body collides into the bottom neck mount.

In some embodiments of the truck, a valve is mounted to a lower axial end of the auxiliary pressure vessel. Said valve may be arranged between the lower neck mount and the bottom frame member. In such cases, a protective collar preferably extends from the lower neck mount toward the bottom frame member, and surrounds and extends beyond the valve, to protect the relatively fragile valve against an impact when the side-mounted pressure vessel abuts the bottom frame member.

### BRIEF DESCRIPTION OF THE DRAWINGS

The invention will be further elucidated in the figures:
FIG. 1 illustrates an embodiment of a truck comprising a side vessel mount structure for suspending a side-mounted pressure vessel on board of the truck;
FIGs. 2A-B provide a detailed view of an embodiment of a coupling arrangement of the side vessel mount structure in normal, undeformed condition (FIG 2A) as well as in deformed condition after an upward impact (FIG B);
FIGs. 3A-B illustrate an exemplary embodiment of a form-lock of the coupling arrangement;
FIGs. 4A-B illustrate another or further exemplary embodiment of the form-lock;
FIGs. 5A-B illustrate yet another or further exemplary embodiment of the form-lock;
FIGs. 6A-B illustrate still another or further exemplary embodiment of the form-lock;
FIG. 7 illustrates an embodiment an auxiliary frame, arranged for suspending an auxiliary pressure vessel and a side fender construction on board of the truck;
FIG. 8 illustrates another or further embodiment of the auxiliary frame.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

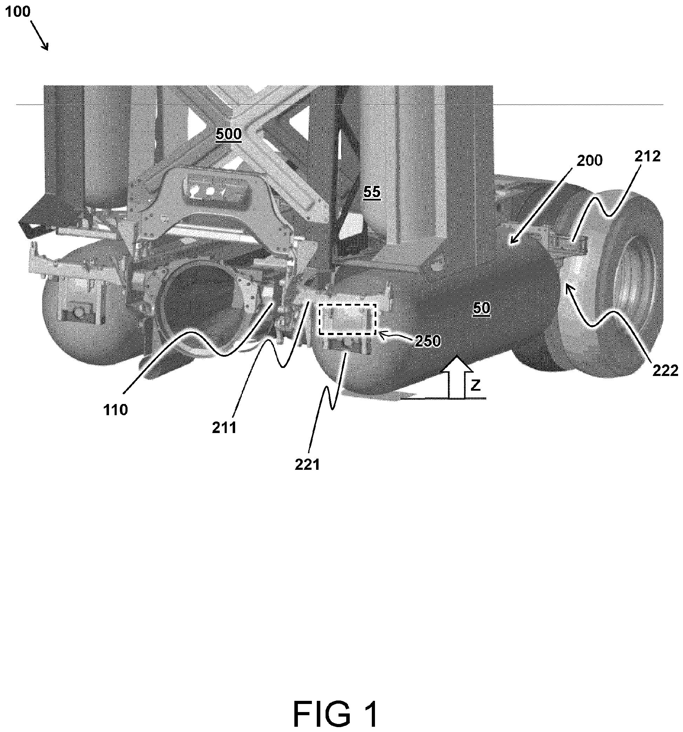

FIG 1 illustrates an embodiment of a truck 100, in particular a Fuel Cell Electric (FCE) truck powered by a (hydrogen) fuel cell unit or a truck powered by a Hydrogen Internal Combustion Engine (H2-ICE). The truck 100 comprises a chassis 110 and a side vessel mount structure 200. The side vessel mount structure 200 is provided on a lateral side of the chassis 110 between a front axle and a rear axle of the truck, and provides front and rear neck mounts 221, 222 arranged for suspending a side-mounted pressure vessel 50 only by its axial ends in a substantially level, or horizontal, orientation. Instead of both front and rear neck mounts, only one neck mount may be present at the front or rear axial end of the pressure vessel, whereas the remaining part of the pressure vessel is suspended in another fashion, e.g. by means of a strap mount or a clamping arrangement. As illustrated, one or more further pressure vessels may be suspended horizontally on an opposing lateral side of the chassis 110, and/or one or more upstanding pressure vessels 55 may be suspended by an auxiliary frame 500 on a top side of the chassis, e.g. between the cabin and a trailer of the truck.

The side vessel mount structure 200 comprises a pair of support arms 211, 212 that laterally extend from the chassis 110 toward the respective neck mounts 221, 222. As illustrated in FIG. 1, the front neck mount 221 is coupled to the front support arm 211 by a coupling arrangement 250. Alternatively, or additionally, the coupling arrangement or a further coupling arrangement may be provided between the rear neck mount 222 and the rear support arm 212.

The present invention is concerned with an upward impact, i.e. in the vertical direction Z, on the side-mounted pressure vessel 50. Such an upward impact can e.g. be caused by a passenger vehicle which, during a collision with the side of the truck, is wedged underneath the pressure vessel 50. An upward impact on the pressure vessel may also be caused when the pressure vessel hits a high curb stone or speed bump that exceeds the vertical road clearance of the side-mounted pressure vessel 50. The present invention aims to protect the axial ends of the pressure vessel during such a crash event. Compared to the cylindrical body of the pressure vessel, its axial ends are relatively fragile since they are typically provided with fuel inlets, outlets, valves, and connecting pipework added to and supported by an aluminum boss end insert that is encapsulated in the carbon fiber structure of the spheric dome ends of the cylindrical tank body. For safety, it is important that the pressure tank does not leak or rupture in the event of a crash, and that the pressure tank stays connected to the chassis. This can be achieved by using the coupling arrangement described herein.

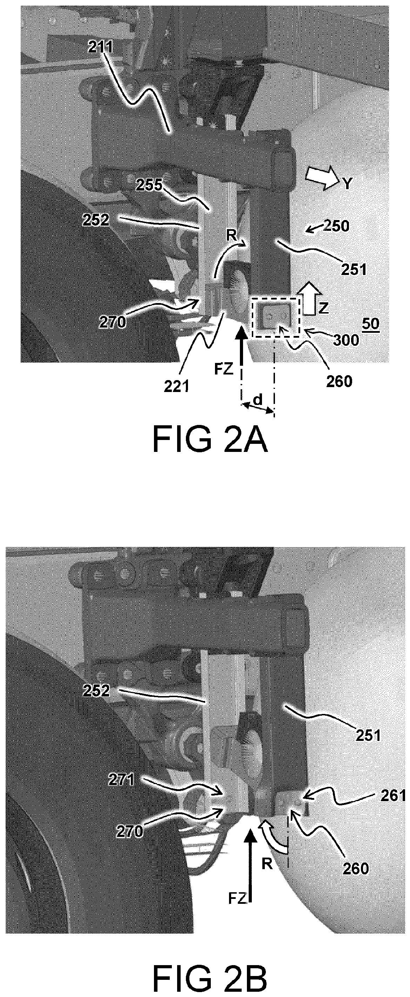

FIG. 2A provides a detailed view of an embodiment of the coupling arrangement 250. As illustrated, the coupling arrangement includes a first leg 251 and a second leg 252 that extend downward, in the vertical direction Z, from the support arm 211 and connect to opposing sides of the neck mount 221. The term 'opposing sides' of the neck mount implies a positive, non-zero distance d between the axial centerline of the pressure vessel and the first leg 251, as illustrated in FIG. 2A. This positive distance d makes an upward impact force FZ result in an intended bending rotational deformation of the first leg 251 which absorbs the impact. The neck mount extends in the lateral direction Y between the opposing sides. The first leg 251 is connected to a side of the neck mount 221 that faces away from the chassis 110, and the second leg 252 is connected to a side of the neck mount 221 that faces to the chassis 110. A reinforced connection 260 is provided between the first leg 251 and the neck mount 221, and a weakened connection 270 is provided by a breakable element between the second leg 252 and the neck mount 221. The breakable element 270 is arranged for breaking in case of an upward impact on the side-mounted pressure vessel 50 while the reinforced connection 260 between the neck mount 221 and the first leg 251 remains intact. This causes an upward rotation R of the neck mount 221 about the reinforced connection 260 during the upward impact. Accordingly, the neck mount 221 is protected against an overload.

As illustrated in FIG. 2A, the first and second leg 251, 252 each have a U-shaped profile, comprising a base that extends between the neck mount 221 and the support arm 211 in the vertical upward direction Z and a pair of upstanding walls that extend from the base in the lateral direction Y. Together with the base these upstanding walls bound the U-shaped cross section of the first and second legs 251, 252. Hence, the U-shaped profiles defines a pair of vertical slots 255 in which at least one end of the neck mount may slide up and down. The vertical slots 255 of the respective U-shaped first and second leg 251, 252 face each other, and the neck mount 221 extends into the opposing vertical slots 255. For example, the neck mount 221 is coupled to the base, and/or to the pair of upstanding walls. During an upward impact, when the connection between the neck mount 221 and the second leg 252 is broke, the vertical slots 255 form a guide for guiding the upward rotation R (as indicated in FIG 2B) of the neck mount 221 about the reinforced connection 260 at the first leg 251.

The breakable element 270 between the neck mount 221 and the second leg 252 is preferably constructed to break only when an upward force FZ on the neck mount 221 exceeds a first force threshold, e.g. in a range between 30-100 kN, to ensure that the neck mount 221 is not decoupled from the second leg 252 during normal operation of the truck. Conversely, the reinforced connection 260 between the neck mount 221 and the first leg 251 is constructed to remain intact until during the whole bending deformation angle or stroke of the first leg 251, including the corresponding resistance force, once the connection to the second leg 252 is broken and the tank 50 and neck mount 221 are moving in upward direction R. As understood by the skilled engineer the desired resistance force characteristic to the upward rotating neck mount 221 can be tuned by adapting the dimensions of the U-beams, such as the thickness of the base and the upstanding walls, the height of the upstanding walls, the type of material selected, etc., as well as by adapting parameter d as indicated in FIG 2A that defines the distance between the center of the neck mount (or axial ends of the tank) and the base of the upstanding first leg 251. The larger this distance d, the lower the vertical bending resistance that is submitted to the upwards moving neck mount by the plastically deforming first leg 251 once the weakened connection 270 of the second lag 251 is broken loose.

As illustrated, the first and second leg 251, 252 together form a four bar mechanism between the support arm 211 and the neck mount 221, in particular a parallelogram mechanism. The four bar mechanism is arranged for collapsing in the lateral direction Y when a lateral force on the neck mount 221 exceeds a threshold force. By collapsing the four bar mechanism laterally guides the neck mount 221 towards the chassis 110 over a guided path while maintaining the mechanical connection between the support arm 211 and the neck mount 221. Thus, the depicted configuration is able to protect the neck mount 221 against overloads in multiple directions, e.g. in the lateral direction Y as well as in the vertical direction Z.

FIGs. 2A and 2B show an embodiment in which the neck mount 221 is connected to the second leg 252 leg by a bolt connection 271, including two bolts that extend laterally between the base of the U-profile and the lateral side of the neck mount 221. Instead of two bolts, the bolt connection 271 may comprise only one bolt or more than two bolts. Conversely, the neck mount 221 may be connected to the first leg 251 by a further bolt connection 261.

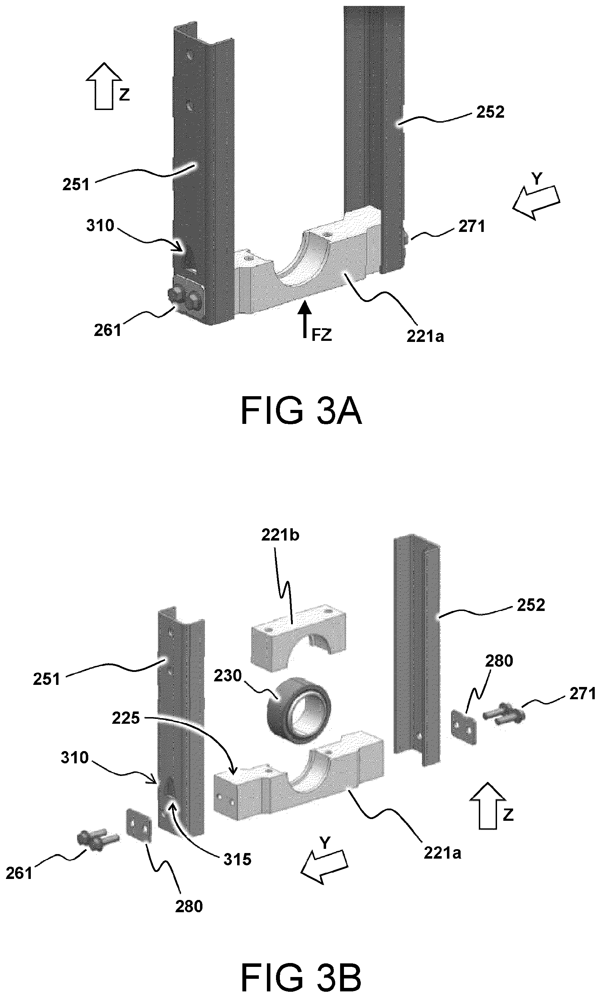

The first and second bolt connections may be designed such that in case of an upward force FZ on the neck mount, the second bolt connection 271 breaks first, thus forms the breakable element 270 or weakened connection. Hence, compared to the second bolt connection 271, the first bolt connection may be reinforced, e.g. by using bolts with a larger diameter or a stronger material, by using more bolts, or by using additional fixtures that prevent an upward migration of the end of the neck mount 221 that is connected to the first leg 251. Preferably, the reinforced connection 260 comprises a form-lock 300 between the neck mount and the first leg, e.g. in addition to the first bolt connection. The form-lock 300 may be designed with a particularly high strength and stiffness in the vertical upward direction Z, to withstand vertical displacement of the neck mount 221 with respect to the first leg 251 due to the upward force FZ. A number of nonlimiting examples of a form lock are now described with reference to FIGs 3-6. In all of these examples, the neck mount 221 is connected to the first and second leg 251, 252 by a respective first bolt connection 261 and second bolt connection 271, with an optional washer 280 between the bolt heads and the first and second legs. The first and second bolt connections 261, 271 are identical, in that they both include two bolts of the same diameter and material. The first bolt connection 261 is reinforced in the vertical direction Z by the form-lock 300.

FIGs. 3A-B illustrate an embodiment of the form-lock 300 that comprises an indent 310 in the first leg 251 above the neck mount 221, which causes a wall section to protrude laterally out (opposite to indicated arrow Y: into the direction of the neck mount center) from the first leg 251. Preferably, the wall section remains substantially parallel to the first leg 251, i.e. in the vertical direction Z. The lower edge 315 of the wall section abuts a top contact surface 225 of the neck mount. Hence, in case of an upward force FZ on the neck mount 221, lower edge 315 constrains un upward translation of the side of the neck mount 221 adjacent the first leg 251, and the indented wall section transfers the upward force FZ to the first leg in the relatively stiff vertical direction Z towards the support arm. The upward force FZ in this case can e.g. be defined as the remaining force component from the peak force that is transmitted by the form lock feature on top of the friction force that originates from the bolted connection 260 of the neck mount 221 to the first leg 251 that is still intact whilst the other bolted connection 270 of the neck mount 221 to the second leg 252 is already broken loose as a result of the upward impact. The resistance characteristics to plastic bending deformation of the first leg 221 determine the exact level of how much force is being transmitted by the form lock feature 300 in case of an upward crash impact..

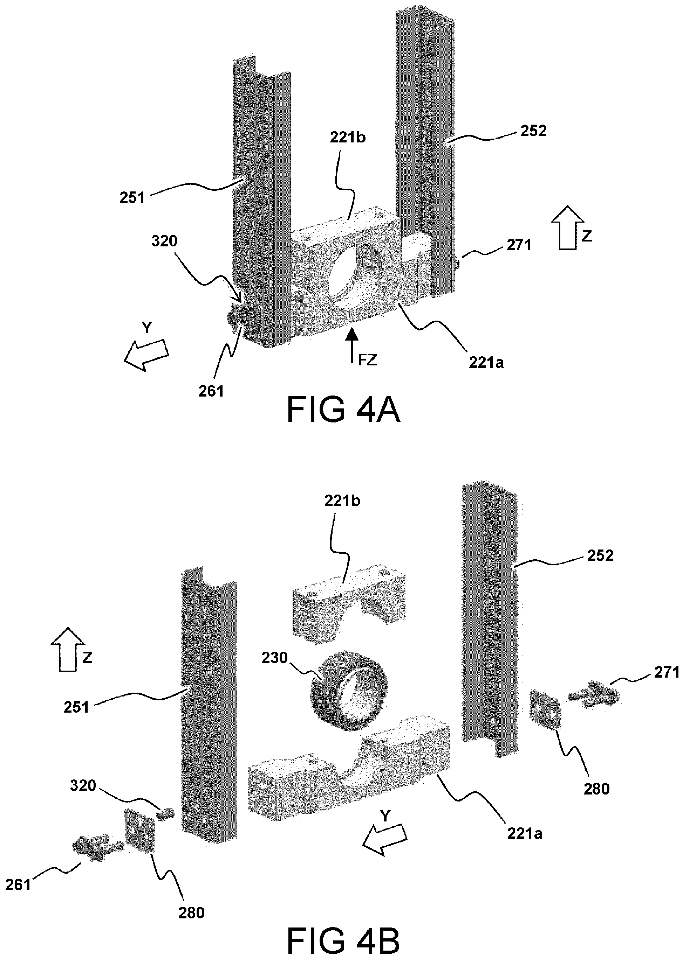

Alternatively, or additionally, as illustrated in FIGs. 4A-B, the form-lock 300 may comprise a locking pin 320, dowel, or key that extends laterally between the first leg 251 and the neck mount 221. More than one locking pin 320 can be used. To fit the locking pin 320, the mating surfaces of the first leg 251 and neck mount 221 can be provided with a hole of which the shape and size corresponds to the shape and size of the locking pin 320. Alternatively, the locking pin 320 may be an integral part of the first leg 251 or the neck mount 221. In case of an upward force FZ on the neck mount 221, a shear stress is induced in the locking pin 320. Hence, by increasing the cross section area and/or by using a pin material with a higher strength, the level of reinforcement can be increased.

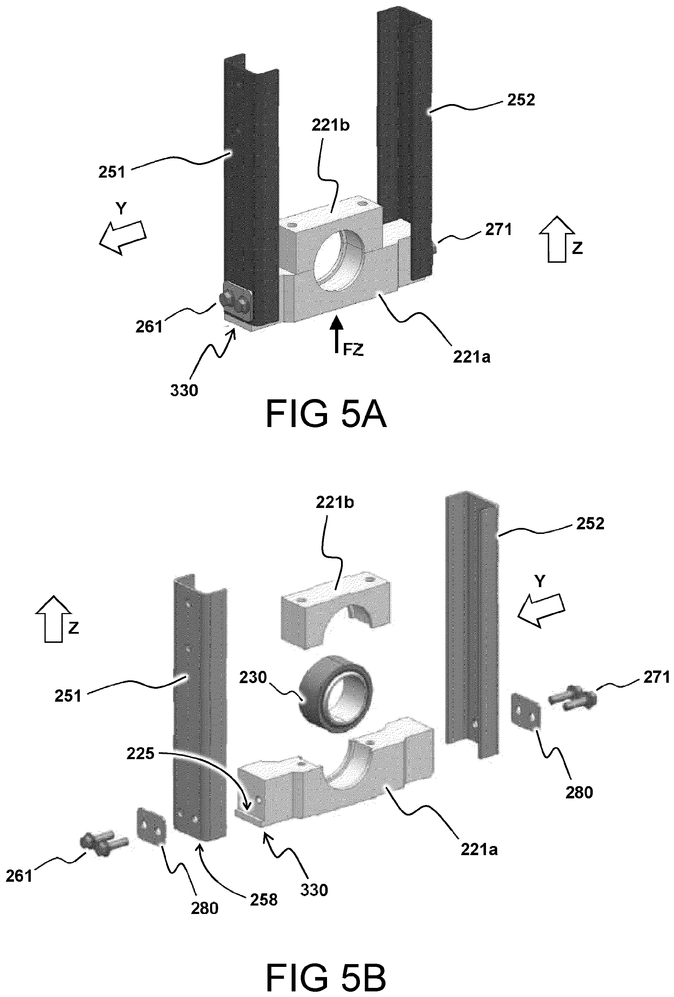

FIGs. 5A-B illustrate an embodiment in which the form-lock 300 comprises a horizontal overlap 330, e.g. on a horizontal plane perpendicular to the vertical direction Z, between a local upward facing top contact surface 225 of the neck mount 221 and a lower downward facing contact surface 258 of the first leg 251. The lateral side of the neck mount 221 that is mounted to the first leg 251 comprises a protruding edge, or step, which provides an upward facing contact surface 225. Conversely, a bottom end of the first leg 251 provides a downward facing contact surface 258. When the neck mount 221 is connected to the first leg 251 by means of the first bolt connection 261, the downward facing contact surface 258 of the first leg 251 abuts the upward facing contact surface 225 of the neck mount 221. Since the abutting surfaces 258, 225 are both in line with the first leg 251, the first leg 251 is loaded only in the relatively stiff and strong vertical direction Z in case of an upward force FZ on the neck mount 221.

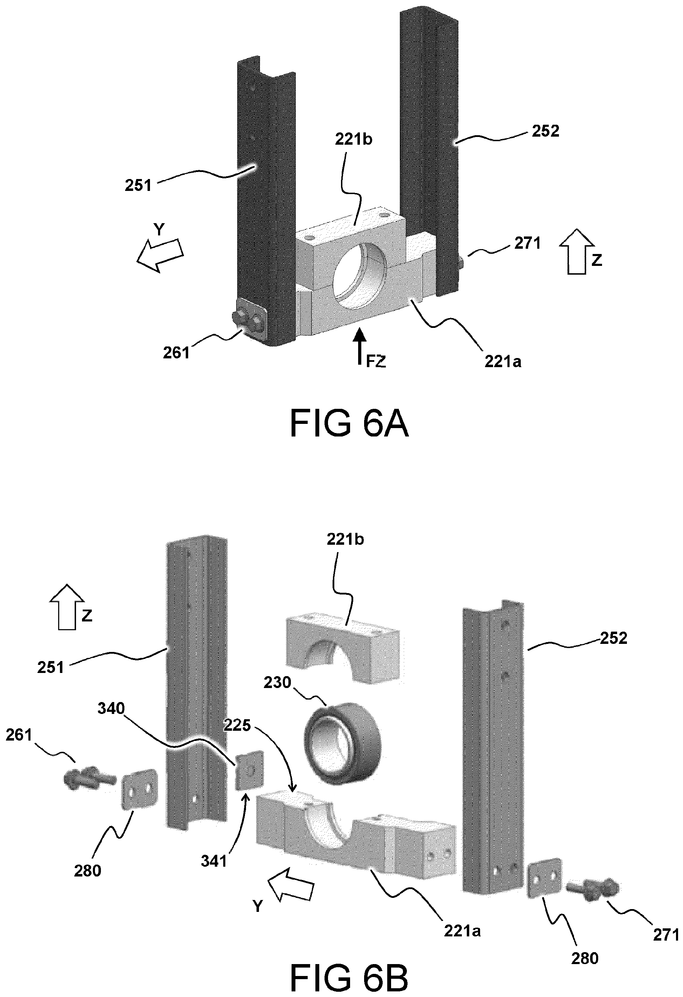

In FIGs. 6A-B, an embodiment is illustrated in which the form-lock 300 comprises a plate 340 that is mounted above the neck mount 221 to a side of the first leg 251 that faces the neck mount 251, e.g. an inner surface inside the vertical slot that is defined by the U-profile. The plate 340 is mounted flat against the inner surface by any suitable fastening means (e.g. bolting, welding, gluing). Accordingly, the lower edge 341 of the plate abuts the contact surface 225 of the neck mount.

In the embodiments illustrated in FIGs 3-6, the neck mount 221 comprises a ball bearing 230 and a housing for the ball bearing. The inner ring of the ball bearing 230 is mounted to the axial end of the side-mounted pressure vessel and the outer ring is fitted in a seat 235 of the housing. By using a ball bearing, the neck mount 221 does not induce any torsion on the axial end during a relative movement, nor is the axial end able to induce torsion on the neck mount 221. In particular during a crash, where the relative movement may be large, this aids in protecting the axial end against overloads.

To facilitate assembly of the neck mount 221, it may include a split housing. For example, the housing comprises a bottom part 221a that defines a bottom segment of the seat 235, and a top part 221b that is mounted to the bottom part 221a and defines a top segment of the seat. Only the bottom part 221a is connected to the first and second leg 251, 252. Such a split design of the neck mount housing is essential for application of a split ball bearing consisting of two halves to be clamped around the boss end of the tank after that the voluminous hydrogen inlet valve has been premounted to a certified tank component assembly. If the ball joint 230 cannot be split during assembly, which is not trivial, then the ball joint 230 may be slid over the boss end beforehand, before other parts are assembled, such as a fuel inlet valve (e.g. with solenoid control valve), pressure and temperature sensors, and more. The valves may be a part of the tank that a tank supplier must certify according to applicable safety regulations, such as the R134 standard, and for that reason it may be necessary that the ball joint (with or without ball joint housing) is included in the logistical handling process and during all further tank pressure and leakage tests.

To have more flexibility in this context, when the relatively voluminous ball joint housing is included in the assembly process, having a split housing can be an advantage. On the other hand however, a one-piece ball joint housing can protect the ball joint during the assembly process. Furthermore, a one-piece housing may also be economically favorable.

Additionally, as illustrated in FIGs 3 through 6, the lower part of the neck mount 221a is stepped as seen in a top view. Such a stepped design can provide clearance for accommodating the hydrogen inlet valve that is mounted to the tank's boss end. The clearance may be dimensioned to decrease the risk of clash points with the carbon fiber tank during large cardanic angles of the ball joint, as they occur during a crash. Dividing the mount into two parts may result in a unit that is easier to manufacture, e.g. in terms of machining surfaces.

There may also be specific differences between a split housing and a one-piece housing in the way the axial constraining of the ring of the ball joint can be solved, each with its own advantages and disadvantages. Notwithstanding, whether a split housing or one-piece housing for the ball joint is used, the connection between the neck mount and the first leg is reinforce, e.g. by including a form lock.

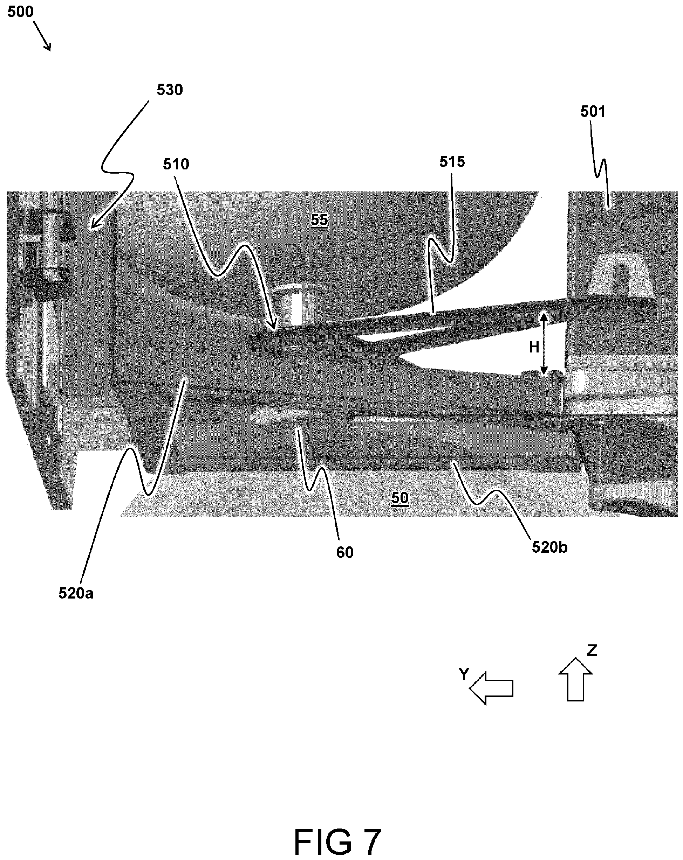

FIG. 7 illustrates an embodiment of the truck 100, in which the truck further comprises an auxiliary frame 500 that is mounted on top of and to the chassis directly behind the cabin, e.g. between the cabin and a trailer of the truck, as also shown in FIG. 1. The auxiliary frame 500 provides an upper and lower neck mount that suspend an auxiliary pressure vessel 55 at its axial ends only in a substantially upright, e.g. vertical orientation. As illustrated in FIG. 7, the lower neck mount 510 is arranged above the side-mounted pressure vessel 50. The lower neck mount 510 can e.g. comprise a flex plate assembly 515 which includes one or more flex plates that connect the lower axial end of the auxiliary pressure vessel 55 to a strut 501 of the auxiliary frame 500 that extends upward from the chassis. The auxiliary frame 500 comprises at least one bottom frame member 520a, 520b that extends laterally from the strut 501 in direction Y and extends between the lower neck mount 510 and the side-mounted pressure vessel 50 and which may extend adjacent to a fuel valve 60 that may be coupled to the lower axial end of the upstanding elongate pressure vessel 55. Preferably, at least one bottom frame member 520a or 520b comprises an omega profile beam, of which the cross section has the shape of an omega symbol. As illustrated, the bottom frame member(s) 520a, 520b form together a bottom frame structure of the auxiliary frame 500 that is circumferent to the fuel valve 60 at the lower end of the upstanding tank 55 and which optionally carries an upstanding side fender system 530 that is positioned at the outside edge (in lateral direction) of the vehicle behind which the upstanding tank 55 is hidden, e.g. for the purpose of aerodynamics and tank protection against UV radiation and stone impacts, as well as for styling of the vehicle. The bottom frame member(s) 520a, 520b may provide an end stop arranged for abutting the cylindrical body of the side-mounted pressure vessel 50 in case of an upward impact, for bounding the upward rotation of the neck mount and the corresponding maximum vertical displacement of the horizontally level chassis sided tank 50 into the overarching vehicle structure during an upward crash impact from the bottom. When the cylindrical body section abuts the bottom frame member(s) 520, a portion of the impact energy that is caused by the upward impact on the side-mounted pressure vessel 50 is absorbed. As said the bottom frame member(s) are preferably manufactured of so-called "omega-profiles" as these kind of beams provide for specific advantages regarding bending deformation behavior of the beam itself to gently absorb the impacting cylindrical tank body (fold along the circular cross section of the tank in lateral direction and maximize the contact area via the bottom lips of the omega-profile to reduce the contact pressure and thus the mechanical stress in the carbon fiber tank body), whilst having sufficient bending stiffness and strength (stable) to carry the load of the outward position side fender system. Preferably, the vertical distance H between the lower neck mount 510 and the bottom frame member 520 is at least 25 millimeter, more preferably at least 35 millimeter, to provide sufficient clearance for an upward deformation of the bottom frame member 520a, 520b as a result of the impact.
Preferably, the cylindrical body of the side-mounted pressure vessel 50 abuts the end stop before the neck mount reaches the end of its stroke of the upward rotation, to prevent large peak loads on the neck mount.

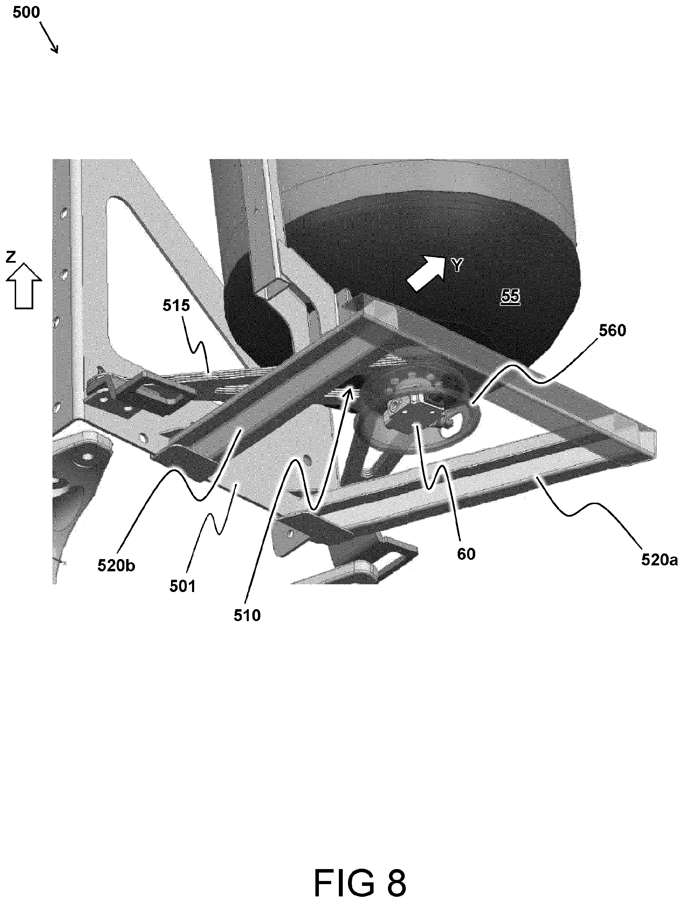

As illustrated in FIG. 8, a valve 60 for controlling a flow of fuel into or out of the auxiliary pressure vessel 55 may be mounted to the lower axial end of the auxiliary pressure vessel 55. As illustrated in FIG. 8 the valve 60 can be a blow-off valve. The valve 60 may be arranged in the vertical space between the lower neck mount 510 and at least one bottom frame member 520a 520b or even extending to one of the lower edges of the bottom frame members 520a, 520b, and adjacent to at least one bottom frame member 520a or 520b. This configuration allows suspension of upstanding elongate pressure vessels 55 with an increased axial length, to maximize the fuel storage within applicable volume constraints on board the truck. To protect the lower tank valve 60 a protective collar 560 may be mounted to the lower neck mount 510, such that the protective collar 560 extends from the lower neck mount 510 toward the bottom frame member 520 and surrounds and extends beyond the valve 60. The diameter and axial length, as well as other properties of the protective collar 560 may be chosen in dependence of the size and shape of the valve 60, and/or taking into account the configuration and deformation under load of the bottom frame member 520.

It will be clear to the skilled person that the invention is not limited to any specific embodiment herein described and that combinations or modifications are possible, in as far as these can be considered within the scope of the appended claims. Also kinematic inversions are considered inherent to the invention disclosed herein. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A truck, comprising a chassis and a side vessel mount structure providing at least one neck mount that suspends a side-mounted pressure vessel to the chassis in a substantially level orientation between a front axle and a rear axle of the truck,
wherein a support arm laterally extends from the or each neck mount towards the chassis, and wherein the or each support arm is coupled to the respective neck mount by a coupling arrangement;
wherein the coupling arrangement comprises a first and second leg that extend downward from the support arm and connect to opposing sides of the neck mount;
wherein a reinforced connection is provided between the first leg and the neck mount, and a weakened connection is provided by a breakable element between the second leg and the neck mount;
wherein the breakable element is arranged for breaking in case of a substantially upward impact on the side-mounted pressure vessel while the reinforced connection between the neck mount and the first leg remains intact, thereby causing an upward rotation of the neck mount about the reinforced connection to protect the neck mount against an overload.

2. The truck according to claim 1, wherein the first and second leg each have a U-shaped profile, comprising a base that extends between the neck mount and the support arm in the upward direction and a pair of upstanding walls that extend laterally from the base, thereby defining a vertical slot, wherein the vertical slots of the respective U-shaped first and second leg face each other, wherein the neck mount extends into the opposing vertical slots, and wherein the vertical slots form a guide for guiding the upward rotation of the neck mount about the reinforced connection.

3. The truck according to any preceding claim, wherein, when the breakable element is broken, the first leg is configured to bend inwards towards the second leg in response to the substantially upward impact to cause the upward rotation of the neck mount about the reinforced connection, thereby absorbing a portion of the impact energy and limiting a resulting force on the neck mount

4. The truck according to claim 3, wherein the coupling arrangement is configured to limit the resulting force on the neck mount within a range between 30-100 kN.

5. The truck according to any preceding claim, wherein the neck mount is connected to the first leg by a first bolt connection, and wherein the neck mount is connected to the second leg by a second bolt connection, wherein the first bolt connection is reinforced with respect to the second bolt connection.

6. The truck according to claim 5, wherein the first bolt connection comprises more bolts than the second bolt connection, and/or bolts with a larger diameter, and/or made of a stronger material, than the bolt(s) of the second bolt connection.

7. The truck according to any preceding claim, wherein the reinforced connection comprises a form-lock between the neck mount and the first leg, wherein the form-lock is arranged for constraining an upward movement of the neck mount relative to the first leg.

8. The truck according to claim 7, wherein the form-lock comprises:
- an indent that protrudes laterally out from the first leg above the neck mount, and wherein a lower edge of the indent abuts a contact surface of the neck mount;
- a locking pin that extends laterally between the first leg and the neck mount;
- a horizontal overlap between a contact surface of the neck mount and a contact surface of the first leg; or
- a plate that is mounted above the neck mount to a side of the first leg that faces the neck mount, wherein a lower edge of the plate abuts a contact surface of the neck mount.

9. The truck according to claim 7, wherein the contact surface of the first leg is formed by a cutout, edge, or lower end face of the first leg that abuts the neck mount contact surface, and wherein the neck mount contact surface is formed by a protrusion, or stepped surface, of the neck mount that extends laterally towards the first leg.

10. The truck according to any preceding claim, wherein the first and second leg together form a four bar mechanism between the support arm and the neck mount, preferably a parallelogram mechanism, wherein the four bar mechanism is arranged for collapsing in the lateral direction when a lateral force on the neck mount exceeds a lateral threshold force, wherein by collapsing the four bar mechanism laterally guides the neck mount towards the chassis over a guided path while maintaining the mechanical connection between the support arm and the neck mount.

11. The truck according to any preceding claim, wherein the neck mount comprises a ball bearing and a housing, wherein the ball bearing has an inner ring mounted to an axial end of the elongated pressure vessel and an outer ring fitted in a seat of the housing, and wherein the housing is connected to the first and second leg.

12. The truck according to claim 11, wherein the housing comprises a bottom part that defines a bottom segment of the seat, and a top part that is mounted to the bottom part and defines a top segment of the seat, wherein only the bottom part is connected to the first and second leg.

13. The truck according to any preceding claim, further comprising an auxiliary frame mounted to the chassis between a cabin and a trailer of the truck, wherein the auxiliary frame provides an upper and lower neck mount that suspend an auxiliary pressure vessel at its axial ends only in a substantially upright orientation, wherein the lower neck mount is arranged above the side-mounted pressure vessel, wherein at least one bottom frame member of the auxiliary frame extends between the lower neck mount and the side-mounted pressure vessel and provides an end stop arranged for abutting a cylindrical body of the side-mounted pressure vessel in case of an upward impact, for bounding the upward rotation of the neck mount.

14. The truck according to claim 13, wherein the at least one bottom frame member comprises a beam with an omega profile, comprising a central horizontal web with two vertical legs extending downward from the ends of the web, and an outward flange or lip at the bottom of each vertical leg, thereby forming an omega shaped cross section.

15. The truck according to any of claims 13-14, wherein a valve mounted to a lower axial end of the auxiliary pressure vessel is arranged between the lower neck mount and at least one bottom frame member, wherein a protective collar extends from the lower neck mount toward the bottom frame member, and surrounds and extends beyond the valve.
